# EUROPEAN PATENT SPECIFICATION

(11) **EP 1 465 439 B1**
(45) Date of publication and mention of the grant of the patent: **04.07.2007**
(21) Application number: 03007547.7
(22) Date of filing: 01.04.2003
(51) Int. Cl.: H04Q 3/00

(54) **Signaling in a Multi-Protocol Telecommunications Environment**
SIGNALISIERUNG IN EINER MULTI-PROTOKOLL TELEKOMMUNIKATIONSUMGEBUNG
Signalisation dans un environement de télécommunications multiprotocoles

(43) Date of publication of application: 06.10.2004
(73) Proprietor: SIEMENS AKTIENGESELLSCHAFT, 80333 München (DE)
(72) Inventor: Gneiting, Dieter, 81375 München (DE); Lüken, Joachim, 80686 München (DE); Schwarzbauer, Hanns Jürgen, Dr., 82194 Gröbenzell (DE); Stupka, Jean-Marie, 82110 Germering (DE)

(56) References cited:
- EP-A- 1 124 387
- ANQUETIL L-P ET AL: "MEDIA GATEWAY CONTROL PROTOCOL AND VOICE OVER IP GATEWAYS. MGCP AND VOIP GATEWAYS WILL OFFER SEAMLESS INTERWORKING OF NEW VOIP NETWORKS WITH TODAY'S TELEPHONE NETWORKS" ELECTRICAL COMMUNICATION, ALCATEL. BRUSSELS, BE, 1 April 1999 (1999-04-01), pages 151-157, XP000830045 ISSN: 0013-4252
- HUITEMA C ET AL: "AN ARCHITECTURE FOR RESIDENTIAL INTERNET TELEPHONY SERVICE" IEEE NETWORK, IEEE INC. NEW YORK, US, vol. 13, no. 3, May 1999 (1999-05), pages 50-56, XP000870631 ISSN: 0890-8044

## Description

Modern telecommunications networks generally include two separate communication pathways. The first is a voice (or bearer) network that handles the transmission of voice or other information between users. The second is a signaling network that facilitates the dynamic linking of a plurality of voice network circuits, such that a voice-type connection is established between a calling party and a called party. Additionally, the signaling network provides a framework through which non-voice related information may be transported in a manner that is transparent to the user. This signaling technique is often referred to as "out of band" signaling, where the term "band" implies voice band. Common examples of such out of band data transport are the access of 800 number database services, calling card verification services and caller ID services.

In order to provide consistent and reliable communication across the signaling network infrastructure, a common or , standard digital signaling protocol known as Signaling System 7 (SS7) has been developed. SS7 is an out of band common channel signaling system that uses labeled messages to transport bearer circuit related signaling information, non-circuit related signaling information, network resident database service information and other information that may be used for the establishment of communication services.

Out of band signaling facilitates the provisioning of various convenient services in addition to providing simple voice-type transmission amongst network users. One class of such services is commonly referred to as Integrated Services Digital Network (ISDN) Supplementary Services.

ISDN Supplementary Services are available to users of the digital telecommunications network. In particular, these services apply to analog or POTS (Plain Old Telephone System) subscribers, as well as to digital subscribers, such as ISDN subscribers.

ISDN Supplementary Services generally include services such as various types of Call Forwarding (CF), Call Waiting (CW), Call Hold (CH), Message Waiting Indication (MWI), Short Message Service (SMS), User Signaling Bearer Service (USBS), Call Completion to Busy Subscribers (CCBS) and Call Completion on No Reply (CCNR).

Some of these services provided in modern communications networks do not require a bearer connection. Therefore, the set of such services is commonly referred to as non-bearer associated or non-call associated services. This set, by way of example, includes the following services: MWI, SMS, USBS, CCBS and CCNR.

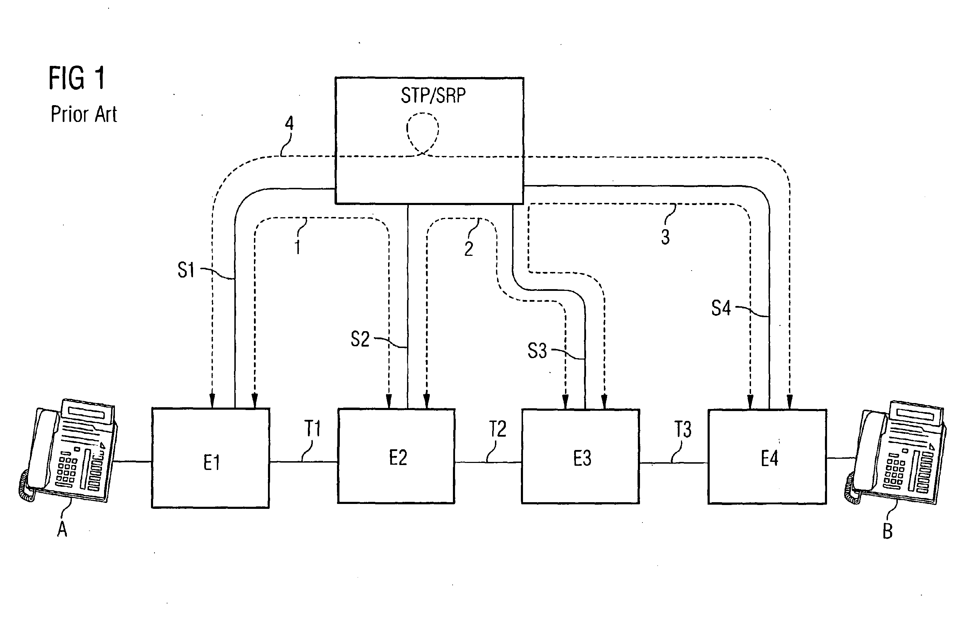

It is common to non-call associated services that the signaling information exchanged for providing a non-call associated service is not related to any bearer connection, whereas call associated signaling, as for example performed by ISDN User Part (ISUP) messages, always relates to some type of bearer connection, as illustrated in Fig. 1.

Fig. 1 shows a typical arrangement in a public switched telecommunications network PSTN. Two users' terminal equipment A, B are connected via four devices E1..E4 of the network, the devices being, for example, local exchanges E1, E4 and transit exchanges E2, E3. Signaling connections S1..S4 connect the four exchanges to a Signaling Relay Point SRP, which may further include a Signaling Transfer Point STP. Inter-Machine Trunks or bearer trunks T1..T3 for transporting voice-type information form direct connections among the four exchanges.

Indicated by dashed lines 1..4 are signaling message paths in the signaling network. Signaling paths 1..3, which may be, for example, ISUP message paths, are call associated message paths for the transport of messages such as call setup or call teardown messages. Signaling path 4, however, is a message path related to a non-call associated service, such as CCBS, the signaling of which utilizes, for example, Signaling Connection Control Part (SCCP) messages.

Generally, only those network devices that directly interface with terminal equipment have the ability to assess status information for terminal equipment and the bearer channels that connect the terminal equipment to the network. An exemplary status is "subscriber busy". Exchanges that directly interface with terminal equipment are often referred to as local exchanges, as denoted by E1 and E4 in the example of Fig. 1.

As a result, each piece of terminal equipment is connected to (and controlled by) exactly one local exchange, the one local exchange monitoring the status of the terminal equipment and its associated bearer channels. In consequence, functions required for the provisioning of ISDN Supplementary Services have traditionally been implemented in local exchanges. For an exemplary non-call associated service, one of the functions performed by the (terminating) local exchange is to monitor the bearer channels of a previously busy subscriber to generate an indication when the subscriber is no longer busy.

As the evolution of telecommunications networks proceeds, a subscriber terminal is no longer serviced exclusively by one network device. In so-called Next Generation Networks (NGN), the subscribers' equipment can communicate directly with numerous network devices via packet switched networks. An example can be found in "Media Gateway Control and Voice over IP Gateways", Anquetil et al., Electrical Communication, Alcatel, pages 151-157, XP830045. In particular, dedicated bearer channels, whose status could be monitored, no longer exist. Problematically, therefore, services that require status information would be impossible to implement.

A possible solution known in the art is to add some signaling functionality to the terminal equipment such that the terminal equipment can autonomously detect and signal its status. Further, the circuit switched local exchange is replaced by a packet switched local exchange comprised of a media gateway and a media gateway controller. That packet switched local exchange would then present itself to the network as the local exchange, again providing the network with status information associated with all terminal equipment assigned to that packet-based local exchange.

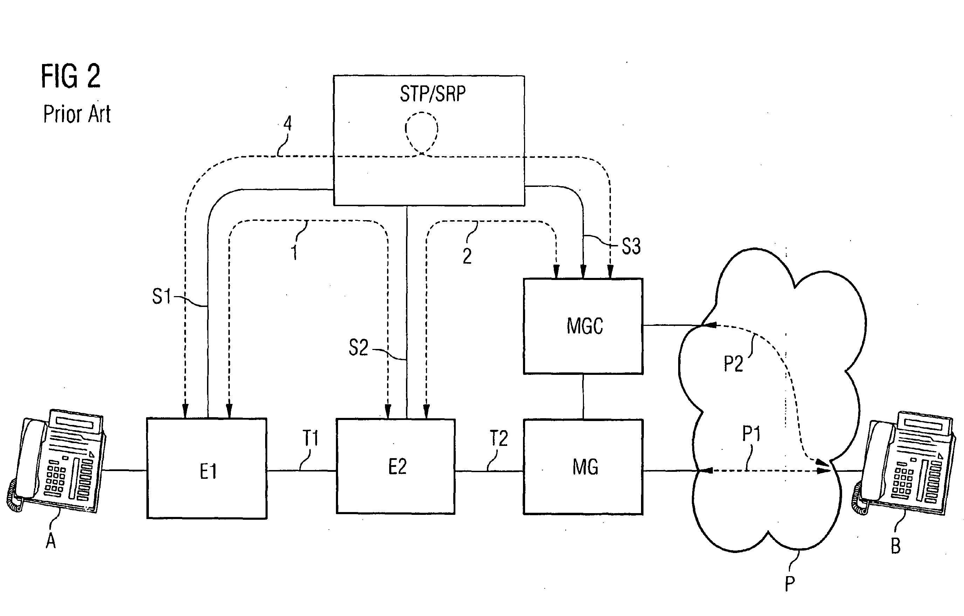

That prior art solution is shown in Fig. 2. In contrast to Fig. 1, the second set of terminal equipment B is connected to the network via a packet switched section P of the network. The local exchange E4 servicing the second set of terminal equipment B is replaced by a media gateway MG under control of a media gateway controller MGC. Dashed lines P1, P2 represent message paths in the packet switched section of the network, connecting the control function MGC and the gateway MG to the terminal B. The media gateway MG and its controller MGC form the packet switched local exchange exclusively controlling the second set of terminal equipment B.

The first set of terminal equipment A is again a conventional PSTN set connected to the network via local exchange E1. Signaling connections S1..S3 connect the exchanges E1, E2 and the media gateway controller MGC to the Signaling Relay Point SRP, which again may include a Signaling Transfer Point STP. Inter-Machine Trunks or bearer trunks T1..T2 for transporting voice-type information form direct connections among the exchanges E1, E2 and the media gateway MG.

Indicated by dashed lines 1, 2, 4 are signaling message paths in the signaling network. Signaling paths 1, 2 are again related to a call, while signaling path 4 is a message path related to a non-call associated service.

A disadvantage to that solution lies in that subscribers' terminal equipment is again tied exclusively to one network device.

Another disadvantage is that continuous polling of the terminal equipment status has to be performed by the packet-based local exchange in order to fully replace the circuit-based local exchanges and all its status monitoring functions.

Yet another disadvantage is that all procedures and functions necessary for non-call associated services have to be implemented in the packet-based local exchange.

It is therefore an object of the present invention to provide an improved solution for non-call associated signaling (N-CAS) in a multi-protocol telecommunications environment.

It is another object of the present invention to provide a centralized signaling gateway for non-call associated services.

In accordance with the present invention there is provided a method for providing control of a terminal, the terminal being coupled to a telecommunications network, the method comprising the steps of:
- bidirectionally communicating call associated signaling messages to the terminal via a first network element; and
- bidirectionally communicating non-call associated signaling messages to the terminal via a second network element.

In accordance with the present invention there is also provided a network arrangement for a telecommunications network for providing control of a terminal, the network arrangement comprising:
- a first network element for bidirectionally communicating call associated signaling messages to the terminal; and
- a second network element for bidirectionally communicating non-call associated signaling messages to the terminal.

An advantage thereof is that there is no need to provide functions and procedures required to handle the non-call associated signaling in the first network element, which in one aspect of the invention can be a media gateway controller.

Applied to a network having multiple first network elements, such as multiple media gateway controllers, the invention advantageously reduces deployment cost for these media gateway controllers by providing one second network element that handles all non-call associated signaling. In one aspect of the invention the second network element comprises a signaling transfer point having or being coupled to a non-call associated signaling gateway, which in a telecommunications network can operate as a centralized non-call associated signaling gateway.

Deployed as a central non-call associated signaling gateway, the novel invention further eases the introduction of new non-call associated services in the network as only a very limited number of these central gateways need to be modified in order for the entire network to support the new services. It also allows for the deployment of services that otherwise could not be implemented, for example due to limitations of the existing systems.

In accordance with the invention there is further provided a non-call associated signaling gateway for a telecommunications network, comprising:
- a control function for bidirectionally communicating control information or status information via a packet switched network section to a terminal;
- an application service element for bidirectionally communicating non-call associated signaling information to a circuit switched network section over a signaling relation, wherein the application service element provides for the termination of the signaling relation; and
- a mediation function for bidirectionally transposing the control or status information to non-call associated signaling information.

In the following, the invention will be described in more detail in the form of preferred embodiments which are better understood in accordance with the following figures.
Fig. 1 is a diagram of a prior network arrangement for providing non-call associated services;
Fig. 2 is a diagram of another prior network arrangement for providing non-call associated services;
Fig. 3A is a diagram of a network arrangement according to the invention;
Fig. 3B is a diagram of another network arrangement according to the invention;
Figures 4A-C are diagrams schematically representing various arrangements of the non-call associated signaling gateway according to the invention in relation to a signaling transfer point.

In Fig. 1, as already described, there is depicted a standard circuit switched network arrangement comprising a signaling transfer point STP, which in the example further includes signaling relay point SRP functionality. Attention is drawn to the signaling path 4, which is the path of non-call associated signaling messages, such as messages related to CCBS, being transmitted in the example network. As shown, this path is between the originating exchange E1 and the terminating exchange E4, assuming that a call is initiated at terminal A, with the call terminating at terminal B.

Fig. 2 shows the situation of Fig. 1, wherein part of the circuit switched network being replaced by a packet network. The path 4 of non-call associated signaling messages terminates at an arrangement formed by a media gateway controller MGC and a media gateway MG which are arranged to exclusively control the second terminal B. The MGC and MG thereby replace the terminating local exchange E4.

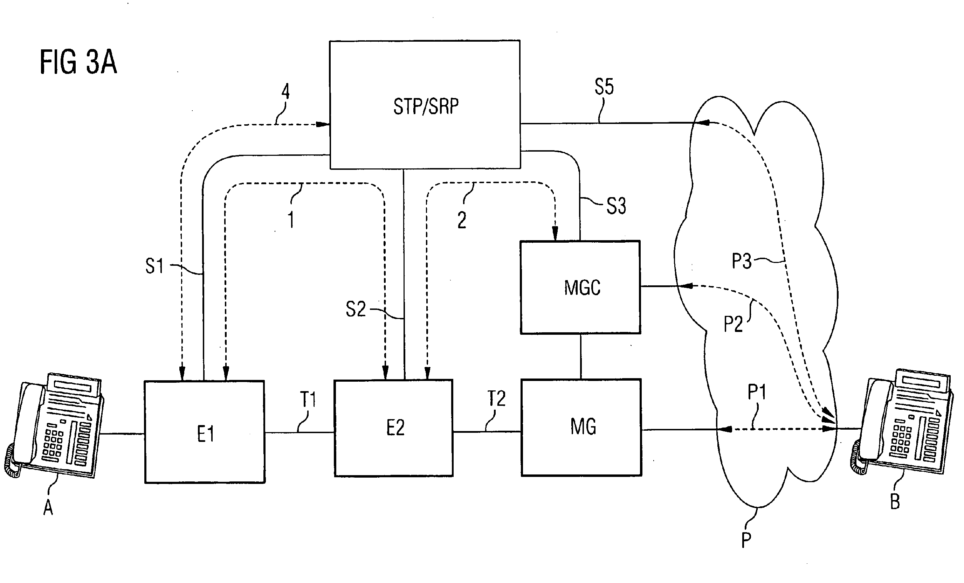

Turning now to Fig. 3A, there is shown a first network arrangement according to the present invention. As before, a first terminal A is connected to a local exchange E1, wherein the local exchange E1 may be a standard PSTN exchange, and wherein the first terminal A may be a standard ISDN or POTS telephone.

The local exchange E1 is communicatively coupled to both a transit exchange E2 (utilizing intermachine trunks T1) and a signaling transfer point STP/SRP (utilizing a signaling connection S1). As with many modern PSTNs, the transit exchange E2 handles the transfer of voice-type information, whereas the signaling transfer point handles the transfer of signaling messages, which are typically SS7 messages.

The transit exchange E2, in turn, is communicatively coupled to both a media gateway MG (utilizing intermachine trunks T2) and the signaling transfer point STP (utilizing a signaling connection S2).

The media gateway MG is communicatively coupled to a packet switched network P. Control for the media gateway is provided by a media gateway controller MGC. The media gateway controller MGC is also communicatively coupled to the packet switched network P. The media gateway controller MGC is further communicatively coupled to the signaling transfer point STP/SRP (utilizing a signaling connection S3).

Coupled to the packet switched network P is a second terminal B. The second terminal B may be a terminal according to any voice over packet standard such as session initiation protocol SIP or ITU-T H.323.

Unlike the network arrangement of Fig. 2, the network arrangement according to the invention as depicted in Fig. 3A does not require the combination of media gateway MG and media gateway controller MGC to assume exclusive control for the second terminal B. Rather, the control relation for the second terminal B can be established on a per call basis. If desired, the control relation between the second terminal B and any of a plurality of media gateways and/or media gateway controllers (not shown) can be established by applying the invention.

As before, if the second terminal B is in a call, there will be a first path P1 through the packet network section P for the transfer of information such as voice. A second path P2 is provided to transfer signaling information between the media gateway controller MGC and the second terminal B. The second path P2, unlike the path P2 of Fig. 2, provides for call associated signaling information such as call setup messages, call teardown messages, conference setup etc. All non-call associated signaling information, such as information associated with services like MWI, SMS, USBS, CCBS and CCNR, is transferred via a third path P3 and a fifth signaling connection S5 directly between the second terminal B and the signaling transfer point STP/SRP.

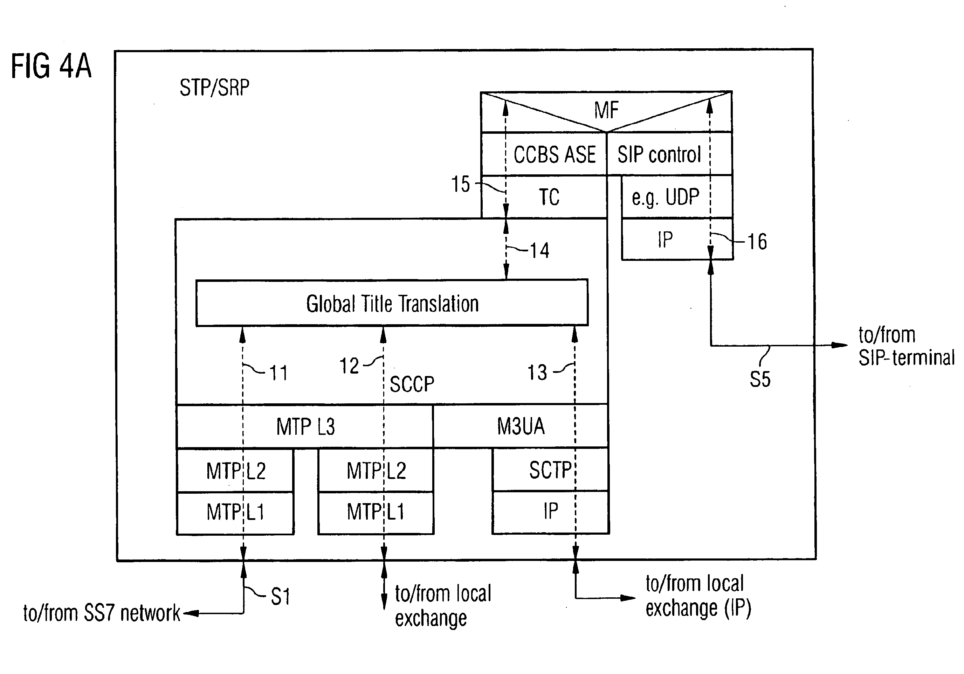

As will be explained in more detail with respect to Figs. 4A-C, call associated and non-call associated signaling needs to be separated by the signaling transfer point STP/SRP. The capabilities in a signaling transfer point that allow for the separation of signaling traffic related with one destination are generally referred to as signaling relay point capabilities. Therefore, the signaling transfer point STP/SRP of Fig. 3A is depicted as having at least some signaling relay point capabilities.

As an example for a non-call associated signaling procedure, the signaling related to CCBS will be explained in more detail.

In the network arrangement of Fig. 3A, it is assumed that a user tries to place call from the first terminal A to reach another user at the second terminal B. Regular call setup procedure involves ISUP messages to be communicated via signaling paths 1 and 2 between the local exchange E1, the transit exchange E2 and the media gateway controller MGC. According to the control information contained in these ISUP messages, bearer channels or trunks T1, T2 will be reserved for conveying information between the users' terminals A, B. Using the second path P2 in the packet network, the media gateway controller MGC notifies the second terminal B of the incoming call.

Assuming the second terminal is busy (or, more generally, all appropriate terminals from a plurality of terminals such as fax terminals, voice terminals, modem terminals etc. - not shown - are busy), the call will be released in backward direction, setting free all resources previously allocated for that particular call. The local exchange E1 will inform the user at A by tone and/or announcement that B is busy.

By invoking the service call completion to busy subscriber CCBS, the user at A requests to be notified when the called party B is again available. The signaling information related to that request is communicated via signaling path 4 in the form of SCCP messages. Unlike the signaling transfer point STP/SRP in either of the Figs. 1 or 2, the signaling transfer point according to the invention does not simply pass on these non-call associated SCCP messages. Rather, the messages are analyzed and upon determination of a CCBS request are handled in the signaling transfer point.

This procedure is shown in detail in Fig. 4A. In Fig. 4A, there is shown the signaling transfer point STP/SRP of Fig. 3A. Messages are communicated bidirectionally to the SS7 network via signaling connection S1. Incoming signaling messages are passed through the MTP levels 1 to 3 to the SCCP (path 11).

To allow for end-to-end communication, the addressing is done using globally valid address information such as telephone numbers, also referred to as global titles (GT). Global titles can be used within a network to ease addressing and must be used when crossing network boundaries. To derive the further route of messages, global titles are analyzed by the SCCP. The message handling may include translation to a new global title, translation to a signaling point code and a subsystem or translation to a local subsystem.

In the example of Fig. 4A, the global title translation yields the address of a local subsystem for CCBS related messages. These messages are then passed on to the local CCBS subsystem implemented in the signaling transfer point STP/SRP (path 14). The CCBS subsystem may comprise a transaction capabilities (TC) handler and a CCBS application service element (CCBS ASE).

The signaling relation that handles the SS7 request (path 4 in Fig. 3A) is terminated in the CCBS ASE. That is, the CCBS ASE receives all signaling traffic from the local exchange E1 in which the CCBS transaction is initiated, and completes the transaction in accordance with SS7 standard procedures, for example by sending appropriate response messages.

The CCBS ASE interfaces with a mediation function MF, which in turn interfaces with a SIP control element. It will be appreciated that SIP is used for illustrative purposes only and that any other voice over packet related protocol can be used with an appropriate control element.

The mediation function bidirectionally transposes the request received from the CCBS ASE to the SIP control, acting as a termination to both the SS7 signaling and the SIP signaling. The SIP control, using an appropriate procedure such as SIP dialogue, communicates a request to the second terminal B via signaling connection S5 and path 5 of Fig. 3A, using an appropriate communications protocol such as UDP/IP (path 16). The request sent to the second terminal B may, for example, comprise a request for notification upon availability of a resource at B.

Upon B becoming available, a notification may be generated and propagated along path 5 of Fig. 3A to the SIP control, which in turn notifies the mediation function MF. The mediation function MF generates a corresponding notification for the CCBS ASE, which will then initiate a TC transaction for notifying the user at A.

The signaling transfer point STP/SRP, as shown in Fig. 4A, may also provide CCBS related messages to prior art local exchanges of Fig. 1 (path 12 of Fig. 4A) or prior art packet local exchanges of Fig. 2 (path 13 of Fig. 4A), where applicable.

Other non-call associated services can readily be implemented in a similar fashion.

In providing the gateway functionality in the signaling transfer point it is no longer necessary to pass on SCCP messages after global title translation to the local exchange (or the unit representing a local exchange in a next generation network environment). That in turn advantageously yields a local exchange that no longer requires resources for providing non-call associated services.

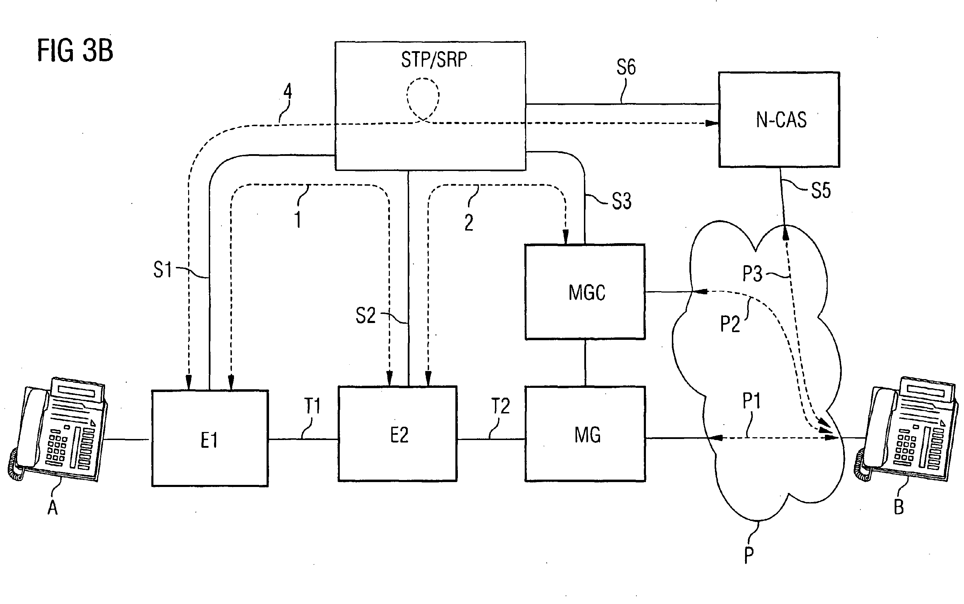

Turning now to Fig. 3B, there is shown a second network arrangement according to the present invention. The network arrangement in Fig. 3B equals that of Fig. 3A except that the system handling the non-call associated signaling is not included in the signaling transfer point. A non-call associated signaling gateway N-CAS is provided instead. This non-call associated signaling gateway N-CAS is coupled to the signaling transfer point STP/SRP via a sixth signaling connection S6, which may be a SS7 connection or any proprietary interface.

The signaling relation 4 related to the non-call associated request terminates in the N-CAS gateway, and the N-CAS gateway provides control for the second terminal B.

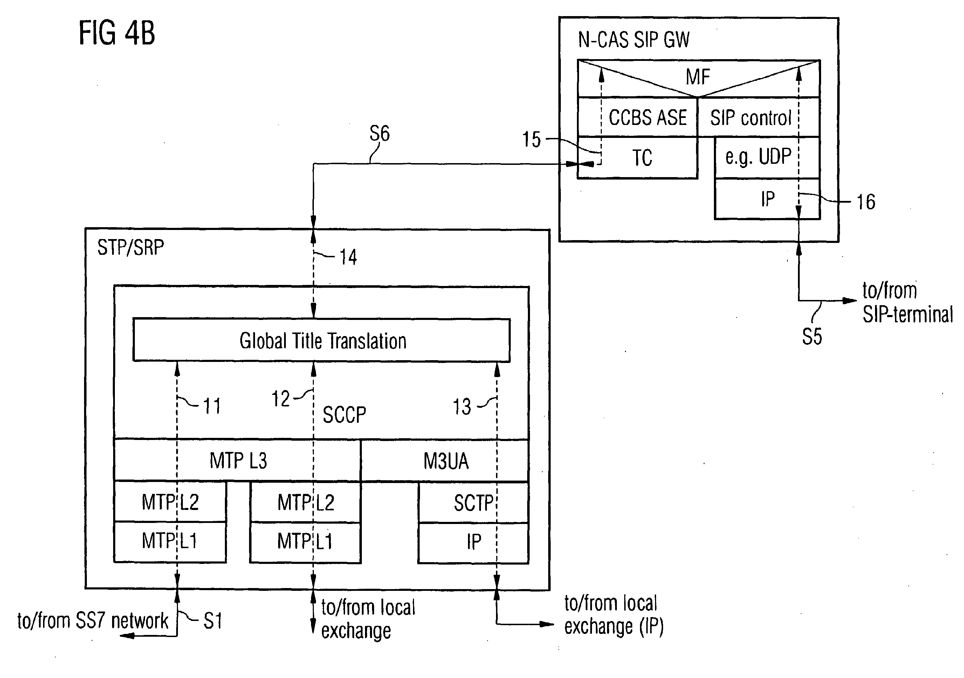

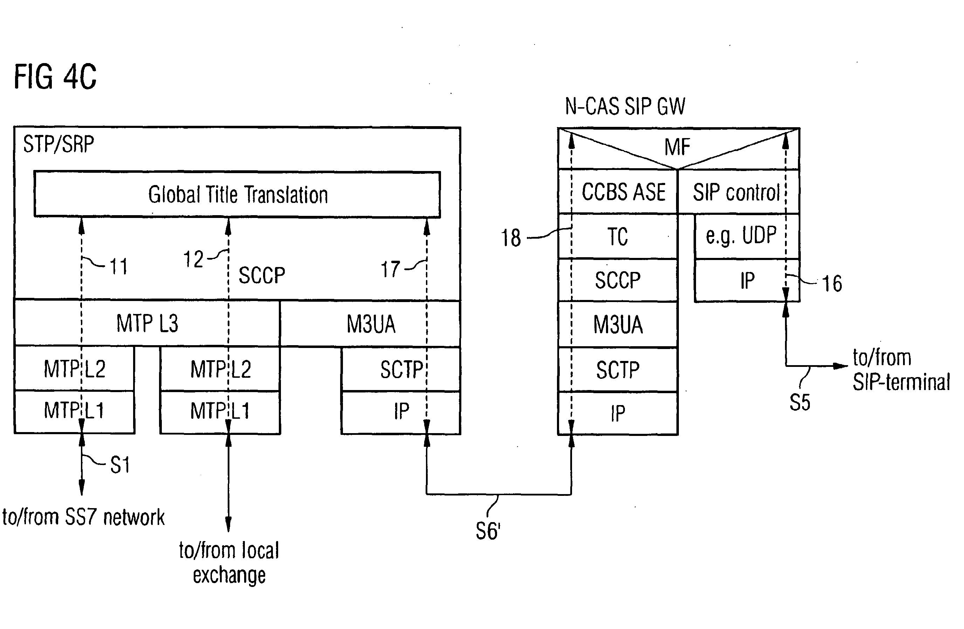

Figs. 4B and 4C show two preferred embodiments for arranging the N-CAS gateway. The N-CAS gateway is shown in Figs. 4B and 4C as an exemplary N-CAS-SIP gateway, assuming again that the second terminal B is a SIP terminal.

In Fig. 4B, there is shown the signaling transfer point STP/SRP of Fig. 3B. Messages are communicated bidirectionally to the SS7 network via signaling connection S1. Incoming signaling messages are passed through the MTP levels 1 to 3 to the SCCP (path 11). Again, the example CCBS request is used for illustration.

In the example of Fig. 4B, the global title translation may again yield the address of a local subsystem representing the N-CAS gateway, or any other address specifying the N-CAS gateway. The N-CAS gateway may be coupled to the signaling transfer point STP/SRP using a non-standard interface. Said non-standard interface may be of such nature that the N-CAS gateway, which is external to the signaling transfer point, appears as an internal component of the signaling transfer point.

CCBS related messages are then passed on to the CCBS subsystem implemented in the N-CAS-SIP gateway (path 14 - S6). The CCBS subsystem may comprise a transaction capabilities (TC) handler and a CCBS application service element (CCBS ASE).

As mentioned before, the signaling relation that handles the SS7 request (path 4 in Fig. 3B) is terminated in the CCBS ASE of the N-CAS-SIP gateway. That is, the CCBS ASE receives all signaling traffic from the local exchange E1 in which the CCBS transaction is initiated, and completes the transaction in accordance with SS7 standard procedures, for example by sending appropriate response messages.

The function of the N-CAS-SIP gateway is similar to what has been described with respect to Fig. 4A from here on.

Again, the signaling transfer point STP/SRP may also provide CCBS related messages to prior art local exchanges of Fig. 1 (path 12 of Fig. 4B) or prior art packet local exchanges of Fig. 2 (path 13 of Fig. 4B), where applicable.

With respect to Fig. 4C, there is shown a N-CAS gateway coupled to the signaling transfer point using a standardized signaling interface S6'. Here, the global title translation may determine a new address for the N-CAS gateway, and the messages are routed correspondingly (path 17) using a well-known protocol architecture, comprised of the protocol layers M3UA, SCTP and IP in the example. Messages are transferred via connection S6' to the N-CAS-SIP gateway, where they are again delivered to a CCBS ASE (path 18).

Providing the gateway functionality outside the signaling transfer point further has the advantage that the signaling transfer point STP/SRP does not require additional procedures and resources for handling and completing the non-call associated service requests. Instead, these requests can be forwarded global title translation to the specialized N-CAS gateway using, for example, a SS7 over IP protocol stack.

In yet another embodiment it would be possible to completely terminate the SCCP protocol layer in the signaling transfer point, while the information is bidirectionally communicated to the N-CAS gateway using a protocol such as the "SCCP User Adaptation Layer protocol" as defined by IETF. Preferably, only relevant data messages would then be propagated to the N-CAS gateway.

## Claims

1. A method for providing control of a terminal (B), the terminal (B) being coupled to a telecommunications network, the method comprising the steps of:
- bidirectionally communicating call associated signaling messages to the terminal via a first network element (MGC); and
- bidirectionally communicating non-call associated signaling messages to the terminal via a second network element (STP/SRP).

2. The method according to claim 1, wherein the step of communicating call associated signaling messages includes the step of communicating the call associated signaling messages via a media gateway controller.

3. The method according to any of the claims 1 or 2, wherein the step of communicating non-call associated signaling messages includes the step of communicating the non-call associated signaling messages via a signaling transfer point (STP/SRP).

4. The method according to claim 3, wherein the step of communicating non-call associated signaling messages includes the step of communicating the non-call associated signaling messages via a mediation function (MF) implemented in said signaling transfer point (STP/SRP).

5. The method according to claim 3, wherein the step of communicating non-call associated signaling messages includes the step of communicating the non-call associated signaling messages via a non-call associated signaling gateway (N-CAS-SIP GW) arranged in a communication path (S6, S5, P3) between the signaling transfer point (STP/SRP) and the terminal (B).

6. A network arrangement for a telecommunications network for providing control of a terminal (B), the network arrangement comprising:
- a first network element (MGC) for bidirectionally communicating call associated signaling messages to the terminal; and
- a second network element (STP/SRP) for bidirectionally communicating non-call associated signaling messages to the terminal.

7. The network arrangement of claim 6, wherein the first network element comprises a media gateway controller.

8. The network arrangement of any of the claims 6 or 7, wherein the second network element comprises a signaling transfer point.

9. The network arrangement of any of the claims 6 or 7, wherein the second network element comprises a non-call associated signaling gateway (N-CAS-SIP GW) coupled to a signaling transfer point (STP/SRP).

10. The network arrangement of any of the claims 6 to 9, wherein the telecommunications network includes a circuit switched network section and a packet switched network section (P).

11. The network arrangement of claim 10, wherein the first and second network elements are coupled to both the circuit switched and the packet switched network sections and wherein the terminal (B) is an element of the packet switched network section (P).

12. The network arrangement of any of the claims 10 or 11, wherein the packet switched network section (P) operates in accordance with any of the following standards: ITU-T H.323; Session Initiation Protocol SIP.

13. A non-call associated signaling gateway (N-CAS SIP GW) for a telecommunications network, comprising:
- a control function (SIP control) for bidirectionally communicating control information or status information via a packet switched network section (P) to terminals (B) ;
- an application service element (CCBS ASE) for bidirectionally communicating non-call associated signaling information to a circuit switched network section over a signaling relation (4), wherein the application service element provides for the termination of the signaling relation; and
- a mediation function (MF) for bidirectionally transposing the control or status information to non-call associated signaling information.

14. The non-call associated signaling gateway of claim 13, wherein the application service element operates as a SCCP subsystem.

15. The non-call associated signaling gateway of any of the claims 13 or 14, wherein the non-call associated signaling gateway is coupled to a signaling transfer point (STP/SRP).

16. A signaling transfer point (STP/SRP) in a telecommunications network including a non-call associated signaling gateway according to any of the claims 13 or 14.

## Patentansprüche

1. Verfahren zur Bereitstellung der Steuerung einer Teilnehmer-Endeinrichtung (B), wobei die Teilnehmer-Endeinrichtung (B) mit einem Telekommunikationsnetz verbunden ist und wobei das Verfahren die folgenden Schritte umfasst:
- bidirektionale Übertragung von verbindungsorientierten Signalisierungsnachrichten an die Teilnehmer-Endeinrichtung über ein erstes Netzelement (MGC); und
- bidirektionale Übertragung von nicht verbindungsorientierten Signalisierungsnachrichten an die Teilnehmer-Endeinrichtung über ein zweites Netzelement (STP/SRP).

2. Verfahren gemäß Anspruch 1, wobei der Schritt der Übertragung von verbindungsorientierten Signalisierungsnachrichten den Schritt beinhaltet, die verbindungsorientierten Signalisierungsnachrichten über eine Medien-Gateway-Steuerungseinheit (MGC, Media Gateway Controller) zu übertragen.

3. Verfahren gemäß einem der Ansprüche 1 oder 2, wobei der Schritt der Übertragung von nicht verbindungsorientierten Signalisierungsnachrichten den Schritt beinhaltet, die nicht verbindungsorientierten Signalisierungsnachrichten über einen Signalisierungstransferpunkt (STP/SRP, Signaling Transfer Point/Signaling Relay Point) zu übertragen.

4. Verfahren gemäß Anspruch 3, wobei der Schritt der Übertragung von nicht verbindungsorientierten Signalisierungsnachrichten den Schritt beinhaltet, die nicht verbindungsorientierten Signalisierungsnachrichten über eine Vermittlungsfunktion (MF, Mediation Function) zu übertragen, welche innerhalb des besagten Signalisierungstransferpunkts (STP/SRP) implementiert ist.

5. Verfahren gemäß Anspruch 3, wobei der Schritt der Übertragung von nicht verbindungsorientierten Signalisierungsnachrichten den Schritt beinhaltet, die nicht verbindungsorientierten Signalisierungsnachrichten über eine Gateway für die nicht verbindungsorientierte Signalisierung (N-CAS-SIP GW) zu übertragen, die in einem Kommunikationsweg (S6, S5, P3) zwischen dem Signalisierungstransferpunkt (STP/SRP) und der Teilnehmer-Endeinrichtung (B) angeordnet ist.

6. Netzanordnung für ein Telekommunikationsnetz zur Bereitstellung der Steuerung einer Teilnehmer-Endeinrichtung (B), wobei die Netzanordnung Folgendes umfasst:
- ein erstes Netzelement (MGC) für die bidirektionale Übertragung von verbindungsorientierten Signalisierungsnachrichten an die Teilnehmer-Endeinrichtung; und
- ein zweites Netzelement (STP/SRP) für die bidirektionale Übertragung von nicht verbindungsorientierten Signalisierungsnachrichten an die Teilnehmer-Endeinrichtung.

7. Netzanordnung gemäß Anspruch 6, wobei das erste Netzelement eine Medien-Gateway-Steuerungseinheit (MGC) umfasst.

8. Netzanordnung gemäß einem der Ansprüche 6 oder 7, wobei das zweite Netzelement einen Signalisierungstransferpunkt (STP/SRP) umfasst.

9. Netzanordnung gemäß einem der Ansprüche 6 oder 7, wobei das zweite Netzelement eine Gateway für die nicht verbindungsorientierte Signalisierung (N-CAS-SIP GW) umfasst, welche mit einem Signalisierungstransferpunkt (STP/SRP) verbunden ist.

10. Netzanordnung gemäß einem der Ansprüche 6 bis 9, wobei das Telekommunikationsnetz einen leitungsvermittelten Abschnitt und einen paketvermittelten Abschnitt (P) beinhaltet.

11. Netzanordnung gemäß Anspruch 10, wobei das erste und das zweite Netzelement sowohl mit dem leitungsvermittelten als auch mit dem paketvermittelten Netzabschnitt verbunden sind und wobei die Teilnehmer-Endeinrichtung (B) ein Element des paketvermittelten Netzabschnitts (P) ist.

12. Netzanordnung gemäß einem der Ansprüche 10 oder 11, wobei der paketvermittelte Netzabschnitt (P) nach einem der folgenden Standards arbeitet: ITU-T, H.323, Session Initiation Protocol SIP.

13. Gateway für die nicht verbindungsorientierte Signalisierung (N-CAS-SIP GW) für ein Telekommunikationsnetz, welche Folgendes beinhaltet:
- eine Steuerungsfunktion (SIP-Steuerung) für die bidirektionale Übertragung von Steuerungsinformationen oder Statusinformationen über einen paketvermittelten Netzabschnitt (P) an Teilnehmer-Endeinrichtungen (B);
- ein Anwendungsdienstelement (CCBS ASE) für die bidirektionale Übertragung von nicht verbindungsorientierten Signalisierungsinformationen an einen leitungsvermittelten Netzabschnitt über eine Signalisierungsbeziehung (4), wobei das Anwendungsdienstelement für die Terminierung der Signalisierungsbeziehung sorgt; und
- eine Vermittlungsfunktion (MF) für die bidirektionale Umsetzung der Steuerungs- oder Statusinformationen in nicht verbindungsorientierte Signalisierungsinformationen.

14. Gateway für die nicht verbindungsorientierte Signalisierung gemäß Anspruch 13, wobei das Anwendungsdienstelement als SCCP-Subsystem arbeitet.

15. Gateway für die nicht verbindungsorientierte Signalisierung gemäß einem der Ansprüche 13 oder 14, wobei die Gateway für die nicht verbindungsorientierte Signalisierung mit einem Signalisierungstransferpunkt (STP/SRP) verbunden ist.

16. Signalisierungstransferpunkt (STP/SRP) in einem Telekommunikationsnetz, welcher eine Gateway für die nicht verbindungsorientierte Signalisierung gemäß einem der Ansprüche 13 oder 14 umfasst.

## Revendications

1. Procédé pour assurer le contrôle d'un terminal (B), le terminal (B) étant couplé à un réseau de télécommunications, le procédé comprenant les étapes de :
- communication bidirectionnelle de messages de signalisation associés à un appel au terminal par le biais d'un premier élément de réseau (MGC) ; et
- communication bidirectionnelle de messages de signalisation non associés à un appel au terminal par le biais d'un second élément de réseau (STP/SRP).

2. Procédé selon la revendication 1, dans lequel l'étape de communication de messages de signalisation associés à un appel inclut l'étape de communication des messages de signalisation associés à un appel par le biais d'un contrôleur de passerelle média.

3. Procédé selon l'une quelconque des revendications 1 ou 2, dans lequel l'étape de communication de messages de signalisation non associés à un appel inclut l'étape de communication des messages de signalisation non associés à un appel par le biais d'un point de transfert de signalisation (STP/SRP).

4. Procédé selon la revendication 3, dans lequel l'étape de communication de messages de signalisation non associés à un appel inclut l'étape de communication des messages de signalisation non associés à un appel par le biais d'une fonction de médiation (MF) exécutée dans ledit point de transfert de signalisation (STP/SRP).

5. Procédé selon la revendication 3, dans lequel l'étape de communication de messages de signalisation non associés à un appel inclut l'étape de communication des messages de signalisation non associés à un appel par le biais d'une passerelle de signalisation non associée à un appel (N-CAS-SIP GW) située dans un chemin de communication (S6, S5, P3) entre le point de transfert de signalisation (STP/SRP) et le terminal (B).

6. Configuration de réseau pour un réseau de télécommunications permettant d'assurer le contrôle d'un terminal (B), la configuration de réseau comprenant :
- un premier élément de réseau (MGC) pour la communication bidirectionnelle de messages de signalisation associés à un appel au terminal ; et
- un second élément de réseau (STP/SRP) pour la communication bidirectionnelle de messages de signalisation non associés à un appel au terminal.

7. Configuration de réseau selon la revendication 6, dans laquelle le premier élément de réseau comprend un contrôleur de passerelle média.

8. Configuration de réseau selon l'une quelconque des revendications 6 ou 7, dans laquelle le second élément de réseau comprend un point de transfert de signalisation.

9. Configuration de réseau selon l'une quelconque des revendications 6 ou 7, dans laquelle le second élément de réseau comprend une passerelle de signalisation non associée à un appel (N-CAS-SIP GW) couplée à un point de transfert de signalisation (STP/SRP).

10. Configuration de réseau selon l'une quelconque des revendications 6 à 9, dans laquelle le réseau de télécommunications inclut une section de réseau commutée par circuits et une section de réseau commutée par paquets (P).

11. Configuration de réseau selon la revendication 10, dans laquelle les premier et second éléments de réseau sont couplés à la fois à la section de réseau commutée par circuits et à la section de réseau commutée par paquets et dans laquelle le terminal (B) est un élément de la section de réseau commutée par paquets (P).

12. Configuration de réseau selon l'une quelconque des revendications 10 ou 11, dans laquelle la section de réseau commutée par paquets (P) fonctionne conformément à l'une quelconque des normes suivantes : ITU-T H.323 ; protocole d'initiation de session SIP.

13. Passerelle de signalisation non associée à un appel (N-CAS-SIP GW) pour un réseau de télécommunications, comprenant :
- une fonction de contrôle (contrôle SIP) pour la communication bidirectionnelle d'information de contrôle ou informations d'état à des terminaux (B) par le biais d'une section de réseau commutée par paquets (P) ;
- un élément de service d'application (CCBS ASE) pour la communication bidirectionnelle d'informations de signalisation non associées à un appel à une section de réseau commutée par circuits sur une relation de signalisation (4), l'élément de service d'application fournissant la terminaison de la relation de signalisation ; et
- une fonction de médiation (MF) pour la transposition bidirectionnelle de l'information de contrôle ou d'état en information de signalisation non associée à un appel.

14. Passerelle de signalisation non associée à un appel selon la revendication 13, dans laquelle l'élément de service d'application fonctionne en tant que sous-système SCCP.

15. Passerelle de signalisation non associée à un appel selon l'une quelconque des revendications 13 ou 14, dans laquelle la passerelle de signalisation non associée à un appel est couplée à un point de transfert de signalisation (STP/SRP).

16. Point de transfert de signalisation (STP/SRP) dans un réseau de télécommunications incluant une passerelle de signalisation non associée à un appel selon l'une quelconque des revendications 13 ou 14.
